# EUROPÄISCHE PATENTSCHRIFT

(11) **EP 0 756 571 B1**
(45) Veröffentlichungstag und Bekanntmachung des Hinweises auf die Patenterteilung: **28.10.1998**
(21) Anmeldenummer: 96901235.0
(22) Anmeldetag: 01.02.1996
(51) Int. Cl.: B65G 53/52

(54) **VERFAHREN ZUR STOSSGEMINDERTEN PNEUMATISCHEN PFROPFENFÖRDERUNG VON SCHÜTTGÜTERN SOWIE VORRICHTUNG ZUR DURCHFÜHRUNG DES VERFAHRENS**
PNEUMATIC BULK MATERIAL SLUG TRANSPORT PROCESS AND DEVICE WITH ATTENUATED SHOCKS
PROCEDE ET DISPOSITIF DE TRANSPORT PNEUMATIQUE A CHOCS REDUITS DE MATERIAUX EN VRAC SOUS FORME DE BOUCHONS

(30) Priorität: 02.02.1995 DE 19503383
(43) Veröffentlichungstag der Anmeldung: 05.02.1997
(73) Patentinhaber: Waeschle Maschinenfabrik GmbH, 88250 Weingarten (DE)
(72) Erfinder: ILTZSCHE, Manfred, D-88250 Weingarten (DE); ERNST, Reinhard, D-88250 Weingarten (DE); METZLER, Eugen, D-88370 Ebenweiler (DE)
(74) Vertreter: Prietsch, Reiner, Dipl.-Ing.
(86) Internationale Anmeldenummer: DE9600173
(87) Internationale Veröffentlichungsnummer: WO9623717

(56) Entgegenhaltungen:
- DE-A- 2 219 199
- DE-A- 2 621 270
- US-A- 5 240 355

## Beschreibung

Die Erfindung betrifft ein Verfahren zur pneumatischen Langsamförderung, insbesondere zur Pfropfenförderung, von Schüttgütern nach dem Oberbegriff des Anspruchs 1, sowie eine Vorrichtung zur Durchführung des Verfahrens nach dem Oberbegriff des Anspruchs 9.

Es sind Schubförderverfahren hoher Schüttgutkonzentrationen bekannt, bei denen das Schüttgut in Form eines geschlossenen Schüttgutstanges oder in Form diskreter Pfropfen (Pfropfenförderung) durch eine Rohrleitung gefördert wird. Während sich die Pfropfenförderung oder Langsamförderung bei kleinen bis mittleren Rohrdurchmessern und kurzen bis mittleren Leitungslängen gut bewährt hat, können bei größeren Förderentfernungen oder/und großen Rohrdurchmessern in Abhängigkeit von den Schüttguteigenschaften beachtliche Probleme auftreten.

Ursache dafür ist die nahezu schlagartige Expansion des komprimierten Gasvolumens zwischen dem Pfropfen, der gerade die Rohrleitung verläßt, und dem auf ihn folgenden Pfropfen. Dieser dynamische Expansionsprozeß bewirkt durch den Wegfall des Gegendrucks an der Vorderseite des Folgepfropfens dessen starke Beschleunigung und die Erhöhung der Geschwindigkeit dieses Pfropfens. Daraus ergeben sich an Umlenkstellen der Förderleitung und an zeitweise überhöhten Ablagerungen (Strähnen) in horizontalen Rohrabschnitten kurzzeitige Stauungen, die sich als Stöße auf die Rohrleitung, deren Funktionsbaugruppen sowie die Lagerung und Unterstützungskonstruktion übertragen. Die dynamische Beanspruchung dieser Baugruppen, Lagerungen und Unterstützungen kann an kritischen Stellen zur Lockerung von Verbindungen oder von Bauteilen der Leitung und ggf. zum Versagen durch Dauerbruch führen. Die durch die dynamische Entspannung ausgelöste innere Dynamik bewirkt ihrerseits ungleichmäßigere Ablagerungshöhen, eine unruhige, mit Druckschwankungen verbundene Förderung und damit eine Verstärkung der Stoßkräfte. Diese Beschleunigungs- und Verzögerungworgänge in der Leitung rufen erhöhte Massenkräfte und erhöhte Reibungskräfte infolge erhöhter Schüttgutpressung im Pfropfen und damit zusätliche Energieverluste gegenüber einer gleichmäßigeren Förderung hervor. Aus den gleichen Gründen entstehen höhere Abrieb- und Fadenanteile als bei einer gleichmäßigeren, stoßärmeren Pfropfen- oder Langsamförderung.

Aus der DE 40 39 496 A1 ist ein Verfahren zum kontinuierlichen Fördern von Schüttgut bekannt, bei dem das Schüttgut aus einem Auffangbehälter über eine Zellenradschleuse und mittels eines Fördermediums in eine Förderleitung aufgegeben wird, wobei das Fördermedium über eine pneumatische Leitung in die Förderleitung eingebracht wird. Mittels einer Regeleinrichtung wird dann das Verhältnis des Durchsatzes von Schüttgut und Fördermedium in der Förderleitung konstant gehalten. Hierdurch soll die Förderung trotz der über die Zellenradschleuse entweichenden Leckluftströmung stabil gehalten werden. In einer speziell für die Pfropfenförderung ausgelegten Variante wird das Fördermedium intermittierend zugeführt, und die Förderleitung weist im Anschluß an die Einspeisestelle eine siphonartige Krümmung auf, weil dies die Pfropfenbildung begünstigt.

Trotz dieses "Taktens" am Förderleitungsanfang kommt es auch bei diesem Verfahren und dieser Vorrichtung zu der ungewollten dynamischen Expansion am Rohrleitungsende. Das Verfahren verhindert die dynamischen Expansionsvorgänge nur am Rohrleitungsende einer kürzeren Förderstrecke. Bei langen Rohrleitungen stellen sich in Abhängigkeit von den Rohrleitungsdurchmessern, den Schüttguteigenschaften und dem Förderzustand bestimmte dynamische Verhältnisse von Pfropfenlänge, Pfropfenabstand und Ablagerungssträhnenhöhe selbsttätig ein, und zwar weitgehend unabhängig davon, welche Bedingungen am Rohrleitungsanfang herrschen.

Es ist somit eine Aufgabe der Erfindung, die energiereiche und abrupte, dynamische Expansion des Volumens des Fördermediums zwischen dem austretenden und dem folgenden Fördergutpfropfen und die dadurch entstehenden, oben geschilderten Folgewirkungen zu reduzieren.

Diese Aufgabe wird durch die Merkmale des Anspruchs 1 verfahrensmäßig und durch die Merkmale des Anspruchs 9 vorrichtungsmäßig gelöst.

Vorteilhafte Ausführungsformen ergeben sich aus den Unteransprüchen.

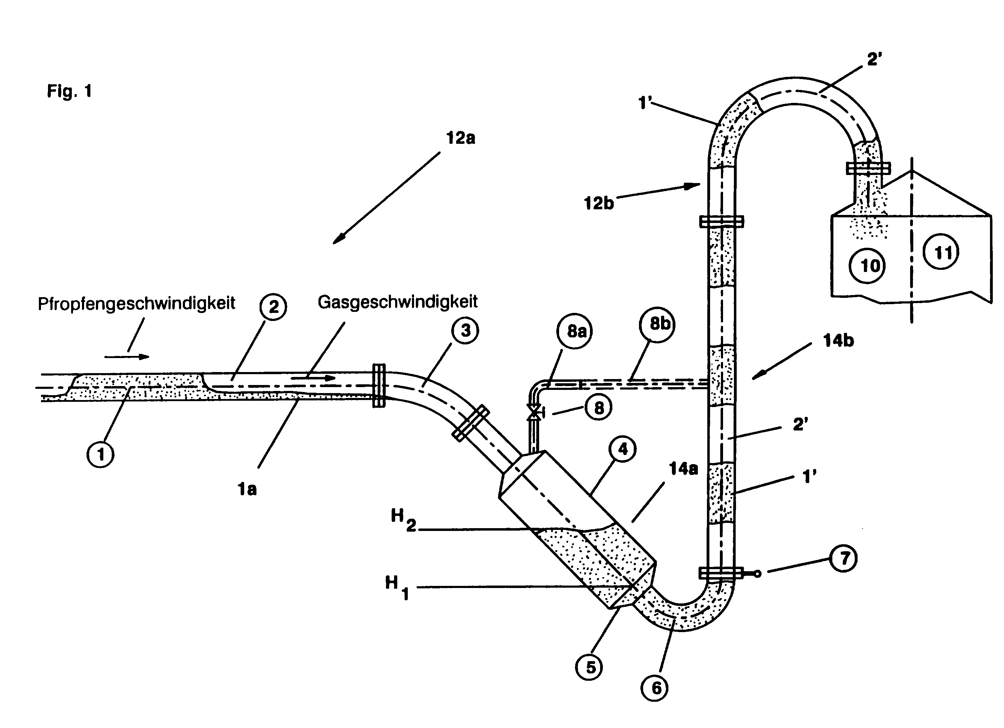

Die Erfindung wird nachfolgend anhand von Fig 1 erläutert.

In Fig. 1 werden Schüttgutpfropfen 1 mittels eines kompressiblen Fördermediums 2 in Abstand voneinander durch eine z.B. 200 m lange Förderleitung bis in deren horizontal verlaufenden Endbereich 12a, pneumatisch gefördert. Die Schüttgutpfropfen 1 werden dort über einen Bogen 3 oder ein ablenkendes Erweiterungsstück in eine vorzugsweise kreiszylindrische Rohrerweiterung 4 stoßfrei bzw. stoßarm eingeleitet, weil sie wegen der in der Abwärtsbewegung fehlenden Staukraft an der Strähne 1a und der fehlenden Reibung an der Rohrwand ihren Zusammenhalt verlieren. Das Schüttgut sammelt sich in einem Übergangsstück 5 und/oder in einem Umlenkstück 6, das vorzugsweise als Bogen mit kleinem Radius ausgebildet ist. Mittels einer entsprechend dimensionierten Querschnittsreduzierung und/oder eines Schiebers 7 und/oder eines Entgasungsventils 8 oder ähnlicher Maßnahmen kann dabei durch vorzugsweise einmalige Einstellung der erwähnten Stellelemente eine zwischen den Niveaus H₁ und H₂ pulsierende Stauhöhe erreicht werden. Das Minimalniveau H₁ vermeidet eine durch die Rohrleitung stromaufwärts durchschlagende Expansion, und das Maximalniveau H₂ verhindert einen zu hohen Druckanstieg und damit eine Verstopfung. Statt mit einer einmaligen Einstellung kann durch Steuerung/Regelung des Schiebers 7 und/oder des Entgasungsventils 8 mit einer von der Stauhöhe und/oder dem Druckaufbau abhängigen, variablen Einstellung ge-arbeitet werden. An das Umlenkstück 6 schließt sich ein vertikaler Rohrleitungsabschnitt 12b an. Dadurch wird erreicht, daß sich stromab von dem Umlenkstück 6 kleinere Pfropfen 1' mit kleinerem Abstand voneinander bilden.

In Abhängigkeit von den Schüttguteigenschaften und den Leitungsabmessungen kann ggf. auf die Erzeugung und Erhaltung eines ständigen Schüttgutpufferniveaus in den Grenzen H₁ und H₂ bzw. auf die Anbringung des Schiebers 7 und/oder des Entgasungsventils 8 verzichtet werden, denn nach der Umlenkung in die Senkrechte entstehen kleinere Pfropfen 1' mit kleinerem Pfropfenabstand, so daß sowohl die Druckdifferenzen gegenüber dem Außendruck als auch die Volumina 2' komprimierten Fördermediums zwischen aufeinanderfolgenden Pfropfen reduziert werden. Da hierdurch auch die gesamte, zwischen aufeinanderfolgenden Pfropfen vorliegende Menge 2' komprimierten Fördermediums sowie dessen absoluter Druck verringert werden, wird bei der Expansion dieses komprimierten Fördermediums 2 am Rohrleitungsende 10 viel weniger Energie frei als wenn der Schüttgutpfropfen 1 den Endbereich 12a z.B. an dem Bogen 3 verlassen würde. Durch diese Maßnahme erfolgt die Entspannung des vorher kompakten Pfropfens in Stufen gegliedert, so daß sich die Stoßkräfte in der Vertikalleitung reduzieren und sich durch die Verlängerung der Verweilzeit dieses in Teilpfropfen gegliederten Pfropfenzuges der Zwischenraumabstand zum Folgepfropfen und damit auch dessen vorlaufendes Entspannungsvolumen verringert. Hierdurch werden die durch die Rohrerweiterung 4 ohnehin schon gedämpften Stöße am Umformereintritt sowie die noch weiter stromaufim geraden Rohrabschnitt 1a möglichen Stöße verhindert bzw. noch weiter reduziert.

Das Entgasungsventil 8 kann auch benutzt werden, um aus der Rohrerweiterung 4 einen Teil des Zwischenraumvolumens zu entspannen. Dann kommt es neben der oben beschriebenen Pfropfenumformung zu einer Reduzierung der Geschwindigkeit des Fördermediums und damit auch der Pfropfengeschwindigkeit im Rohrabschnitt nach dem Umformer. Gleichzeitig trägt die Reduzierung der Gas- und Pfropfengeschwindigkeit in diesem Bereich zu einer weiteren Erhöhung der Verweilzeit der Teilpfropfen und damit der Reduzierung der Durchschlagsneigung der Entspannung aus dem Bereich 12b in den Bereich 12a bei. Eine andere Möglichkeit zur Verringerung der Strömungsgeschwindigkeit des Fördermediums besteht darin, den Durchmesser des vertikalen Rohrleitungsabschnitts 12b zu vergrößern. Beim Austritt der verkleinerten Schüttgutpfropfen 1' in das Empfangsgefäß 11 entspannt sich ein ebenfalls verkleinertes Volumen 2' komprimierten Fördermediums, das sich im Moment des Austritts des Pfropfens bis zum folgenden Pfropfen 1' erstreckt.

Wahlweise kann der Anschlußstutzen 8a des Entgasungsstutzens 8 auch mit der Vertikalleitung durch eine Bypaßleitung 8b verbunden werden.
In der Zeichnung ist die Rohrerweiterung 4 als zylindrischer Topf mit einer um ca. 45° zur Vertikalen geneigten Mittelachse dargestellt. Stattdessen kann auch ein Gefäß mit vertikaler Mittelachse und trichterförmigem Boden verwendet werden.
Des weiteren kann anstelle des Schiebers 7 eine andere Drosseleinrichtung, z.B. eine Drosselklappe verwendet werden, die z.B. dem vorgenannten Gefäß unmittelbar nachgeordnet ist und gesteuert oder geregelt die Spaltweite eines Drosselspaltes so ändert, daß der Füllstand des Gefäßes zwischen einem Minimal- und einem Maximalniveau bleibt.

## Patentansprüche

1. Verfahren zur Förderung von Schüttgut mit Hilfe eines kompressiblen Fördermediums und in Form diskreter Schüttgutpfropfen (1) in einer Rohrleitung, wobei sich zwischen den Pfropfen (1) jeweils eine bestimmte Stoffmenge (2) komprimierten Fördermediums befindet, die ein bestimmtes Volumen zwischen aufeinänderfolgenden Pfropfen einnimmt, **dadurch gekennzeichnet**, daß die jeweilige Stoffmenge (2') komprimierten Fördermediums zwischen aufeinanderfolgenden Pfiopfen (1') im stromabwärts gelegenen Endbereich (12b) der Rohrleitung gegenüber der Stoffmenge (2) komprimierten Fördermediums (2) zwischen aufeinanderfolgenden Pfropfen (1) in dem vor dem Endbereich (12b) stromaufwärts gelegenen Bereich (12a) der Rohrleitung (12) verringert wird, wodurch die durch Expansion des komprimierten Fördermediums beim Austritt (10) aus der Rohrleitung frei werdende Energie verringert wird.

2. Verfahren nach Anspruch 1, dadurch gekennzeichnet, daß zur Verringerung der Stoffmenge (2') komprimierten Fördermediums zwischen aufeinanderfolgenden Pfropfen (1') im Endbereich (12b) der Rohrleitung die Pfropfen (1) zu Pfropfen (1') mit verringerter Länge und verringertem Abstand umgeformt werden.

3. Verfahren nach Anspruch 2, dadurch gekennzeichnet, daß zur Umformung der Pfropfen (1) zu Pfropfen (1') verringerter Länge und verringerten Abstands die Pfropfen (1) durch einen siphonartigen Rohrabschnitt (6) gefördert werden.

4. Verfahren nach Anspruch 3, dadurch gekennzeichnet, daß die Pfropfen (1) stromauf von dem siphonartigen Rohrabschnitt (6) durch einen Rohrabschnitt (4) mit erweiterter Querschnittsfläche gefördert werden und in dem Rohrabschnitt (4) ein sich erneuernder Teil des Schüttguts abgelagert und verzögert ausgetragen wird.

5. Verfahren nach Anspruch 4, dadurch gekennzeichnet, daß der Füllstand des abgelagerten Teils des Schüttguts in dem Rohrabschnitt (4) zwischen einem minimalen Pegel (H₁) und einem maximalen Pegel (H₂) gehalten wird.

6. Verfahren nach Anspruch 5, dadurch gekennzeichnet, daß zur Einstellung des Füllstandes des Schüttguts eine Entgasungsvorrichtung (8) am stromaufseitigen Ende des Rohrabschnitts (4) und/oder ein Schieber (7) oder eine andere Art der Querschnittsdrosselung am stromabseitigen Ende des siphonartigen Rohrabschnitts (6) verstellt wird/werden, wobei die abströmende Gasmenge über eine Leitung (8a) ins Freie oder in die Vertikalleitung (über 8b) oder in ein Silo geleitet wird.

7. Verfahren nach einem der vorhergehenden Ansprüche, dadurch gekennzeichnet, daß man zur Verringerung der Stoffmenge (2') komprimierten Fördermediums zwischen aufeinanderfolgenden Pfropfen (1') verringerter Länge und verringerten Abstands im Endbereich (12b) der Rohrleitung stromauf von der Austrittsöffnung (10) Fördermedium abströmen läßt.

8. Verfahren nach Anspruch 7, dadurch gekennzeichnet, daß man das Fördermedium nur zwischen zwei Pfropfen (1') verringerter Länge und verringerten Abstands abströmen läßt.

9. Vorrichtung zur Förderung eines Schüttguts mit Hilfe eines kompressiblen Fördermediums, wobei das Fördergut in Form diskreter Pfropfen (1) gegebener, jedoch variabler Länge durch die Rohrleitung wandert und sich zwischen den Pfropfen jeweils eine gegebene, jedoch variable Stoffmenge (2) komprimierten Fördermediums befindet, die ein gegebenes, jedoch variables Volumen zwischen aufeinanderfolgenden Pfropfen (1) einnimmt, **dadurch gekennzeichnet**, daß die Vorrichtung eine Einrichtung zur Verringerung der jeweiligen Stoffmenge (2') komprimierten Fördermediums zwischen aufeinanderfolgenden Pfropfen (1') im Endbereich (12b) der Rohrleitung aufweist.

10. Vorrichtung nach Anspruch 9, dadurch gekennzeichnet, daß die Einrichtung zur Verringerung der jeweiligen Stoffmenge (2') eine Einrichtung zum Umformen der Pfropfen (1) zu Pfropfen (1') mit verringerter Länge und verringertem Abstand im Rohrendbereich aufweist.

## Claims

1. A process for conveying bulk material by means of a compressible conveyor medium and in the form of discrete bulk material plugs (1) in a conduit, wherein between the plugs (1) is a respective given amount (2) of compressed conveyor medium which occupies a given volume between successive plugs, characterised in that the respective amount (2') of compressed conveyor medium between successive plugs (1') is reduced in the downstream end region (12b) of the conduit with respect to the amount (2) of compressed conveyor medium (2) between successive plugs (1) in the region (12a) of the conduit (12), which is disposed upstream of the end region (12b), whereby the energy which is liberated by expansion of the compressed conveyor medium upon issuing (10) from the conduit is reduced.

2. A process according to claim 1 characterised in that to reduce the amount (2') of compressed conveyor medium between successive plugs (1') the plugs (1) are transformed in the end region (12b) of the conduit into plugs (1') of reduced length and reduced spacing.

3. A process according to claim 2 characterised in that the plugs (1) are conveyed through a siphon-like pipe portion (6) for transformation of the plugs (1) into plugs (1') of reduced length and at a reduced spacing.

4. A process according to claim 3 characterised in that upstream of the siphon-like pipe portion (6) the plugs (1) are conveyed through a pipe portion (4) of enlarged cross-sectional area and a portion of the bulk material, which renews itself, is deposited in the pipe portion (4) and discharged with a delay.

5. A process according to claim 4 characterised in that the filling level of the deposited portion of the bulk material in the pipe portion (4) is kept between a minimum level (H₁) and a maximum level (H₂).

6. A process according to claim 5 characterised in that for the purposes of setting the filling level of the bulk material a gas removal device (8) at the upstream end of the pipe portion (4) and/or a slider (7) or another kind of cross-sectional throttling means at the downstream end of the siphon-like pipe portion (6) is/are adjusted, wherein the amount of gas flowing away is passed by way of a line (8a) into the open air or into the vertical conduit (by way of 8b) or into a silo.

7. A process according to one of the preceding claims characterised in that conveyor medium is allowed to escape to reduce the amount (2') of compressed conveyor medium between successive plugs (1') of reduced length and at a reduced spacing in the end region (12b) of the conduit upstream of the outlet opening (10).

8. A process according to claim 7 characterised in that the conveyor medium is allowed to escape only between two plugs (1') of reduced length and at a reduced spacing.

9. Apparatus for conveying a bulk material by means of a compressible conveyor medium wherein the material to be conveyed moves through the conduit in the form of discrete plugs (1) of given but variable length and between the plugs is a respective given but variable amount (2) of compressed conveyor medium which occupies a given but variable volume between successive plugs (1) characterised in that the apparatus has a device for reducing the respective amount (2') of compressed conveyor medium between successive plugs (1') in the end region (12b) of the conduit.

10. Apparatus according to claim 9 characterised in that the means for reducing the respective amount (2') has a means for transforming the plugs (1) into plugs (1') of reduced length and at a reduced spacing in the end region of the conduit.

## Revendications

1. Procédé pour le transport d'une matière en vrac à l'aide d'un milieu de transport compressible et sous la forme de bouchons discrets (1) dans une conduite tubulaire, dans lequel, dans chaque intervalle entre les bouchons (1), se trouve une certaine quantité (2) de milieu de transport comprimé qui occupe un certain volume entre les bouchons successifs, caractérisé en ce que la quantité (2') de milieu de transport comprimé comprise entre les bouchons (1') successifs est réduite, dans la zone d'extrémité aval (12b) de la conduite tubulaire, par rapport à la quantité (2) de milieu de transport comprimé (2) comprise entre les bouchons (1) successifs dans la région amont (12a) de la conduite tubulaire (12) qui est située avant la zone d'extrémité (12b), de sorte que l'énergie, qui est libérée par la détente du milieu de transport comprimé lors de sa sortie (10) hors de la conduite tubulaire, s'en trouve diminuée.

2. Procédé selon la revendication 1, caractérisé en ce que, pour réduire la quantité (2') de milieu de transport comprimé comprise entre deux bouchons (1') successifs dans la zone d'extrémité (12b) de la conduite tubulaire, les bouchons (1) sont transformés en bouchons (1') de longueurs et d'espacements réduits.

3. Procédé selon la revendication 2, caractérisé en ce que, pour la transformation des bouchons (1) en bouchons (1') de longueurs et d'espacements réduits, les bouchons (1) sont transportés le long d'un segment de tube (6) en forme de siphon.

4. Procédé selon la revendication 3, caractérisé en ce qu'en amont du segment de tube (6) en forme de siphon, les bouchons (1) sont transportés le long d'un segment de tube (4) de section agrandie, et en ce que, dans le segment de tube (4), une partie de la matière en vrac qui se renouvelle, est introduite, puis évacuée de façon temporisée.

5. Procédé selon la revendication 4, caractérisé en ce que l'état de remplissage de la partie de la matière en vrac introduite dans le segment de tube (4) est maintenu entre un niveau minimal (H₁) et un niveau maximal (H₂).

6. Procédé selon la revendication 5, caractérisé en ce que, pour le réglage de l'état de remplissage de la matière en vrac, on règle un dispositif de dégazage (8) prévu à l'extrémité amont du segment de tube (4) et/ou une vanne (7) ou une autre sorte de dispositif d'étranglement de la section prévu à l'extrémité aval du segment de tube (6) en forme de siphon, la quantité de gaz qui s'échappe étant rejetée dans l'air libre par une conduite (8a) ou étant envoyée dans la conduite verticale (en passant par 8b) ou dans un silo.

7. Procédé selon une des revendications précédentes, caractérisé en ce que, pour la réduction de la quantité (2') de milieu de transport comprimé comprise entre deux bouchons (1') successifs de longueurs et d'espacements réduits, on laisse du milieu de transport s'échapper dans la zone d'extrémité (12b) de la conduite tubulaire en amont de l'ouverture de sortie (10).

8. Procédé selon la revendication 7, caractérisé en ce qu'on ne laisse le milieu de transport s'échapper qu'entre deux bouchons (1') de longueurs et d'espacements réduits.

9. Appareil pour le transport d'une matière en vrac à l'aide d'un milieu de transport compressible, dans lequel la matière à transporter circule dans la conduite tubulaire sous la forme de bouchons discrets (1) d'une longueur donnée mais variable et dans lequel, dans chaque intervalle entre les bouchons, se trouve une quantité donnée mais variable (2) de milieu de transport comprimé qui occupe un volume donné mais variable entre les bouchons (1) successifs, caractérisé en ce que l'appareil comprend un dispositif pour réduire la quantité (2') de milieu de transport comprimé comprise entre les bouchons (1') successifs dans la zone d'extrémité (12b) de la conduite tubulaire.

10. Appareil selon la revendication 9, caractérisé en ce que le dispositif pour réduire la quantité (2') comprend un dispositif pour transformer les bouchons (1) en bouchons (1') de longueurs et d'espacements réduits dans la zone d'extrémité du tube.
